# EUROPEAN PATENT APPLICATION

(11) **EP 1 649 972 A1**
(43) Date of publication of application: **26.04.2006**
(21) Application number: 05425724.1
(22) Date of filing: 14.10.2005
(51) Int. Cl.: B23Q 1/54, B23Q 1/00, B23Q 15/16

(54) **Self adjustable tool spindle with elastic connection between its two shafts**

(30) Priority: 21.10.2004 IT PD20040261
(71) Applicant: Mei s.r.l., 24030 Presezzo (BG) (IT)
(72) Inventor: Sonzogni, Stefano, 24030 Presezzo (BG) (IT)
(74) Representative: Vinci, Marcello

(57) **Abstract**

Tool spindle provided with a body for supporting both a primary shaft and a secondary shaft connected to each other through a twist elastic element that maintains the secondary shaft rotatively preloaded against a stop ring, in such a way as to oppose the tangential operating force. Both the spindle body and the secondary shaft are provided with reference slots, while two sensors, which detect the passage of each slot at each revolution of the spindle, make it possible to determine the displacement between the two slots, that is, the angular displacement between the two shafts and consequently to adjust, by small values, the position of the spindle, in such a way as to maintain a predefined setpoint.

## Description

The present patent concerns machine tools with rotary tool and in particular it concerns tool spindles for machine tools.

The machine tools with rotary tool used at present are controlled and operated by an electronic computer and by numerically controlled sensors and actuators.

The machine tools currently available are provided with a tool magazine where the various tools are kept, each one with the relevant spindle. The tool carrier head is translated to the tool magazine each time it is necessary to release the currently used tool and to load the tool needed for the successive machining cycle.

Substantially, each tool is installed on a spindle that must be suitable for and compatible with the head and housed in a specific position in the tool magazine.

Substantially each spindle has the function to hold the tool, allow the tool to be loaded in and released from its position in the magazine and on the head, and transmit the rotary motion from the head motor to the tool.

The tool wears out with use and its diameter, that is, the distance between its working surface and its rotation centre, is reduced accordingly. Therefore, the preset path in the numerically controlled machine produces the object with different dimensions, greater or smaller depending on the concave or convex sides. At present the operator must measure and set in the control electronic circuit the current value of the tool diameter after a certain lapse of time or a given number of machining cycles.

In many types of machining it is necessary to maintain the pressure of the tool on the surface to be machined independently of the shape of the object to be machined, be it a small surface, a concave or a convex surface. Said pressure results in different machining of the various parts of the piece and also in irregular wear of the tool.

To overcome all the drawbacks mentioned above, a new tool spindle has been designed and implemented.

The aim of the new spindle is to obtain a tool fastening system whose overall dimensions are extremely small.

Another aim of the invention is to obtain a new spindle that is capable of measuring the tangential stress of the rotary tools and of managing the work position of the machine in order to obtain a constant value independently of the shape of the piece to be machined.

Another aim of the invention is to obtain a new spindle that can measure the value of the tangential stress in real time.

Another aim of the invention is to obtain a new spindle suitable for automatic tool change.

A further aim of the invention is to obtain a new spindle that locks the tools with smooth cylindrical shank firmly, also ensuring height adjustment.

Another aim of the invention is that the new spindle should be capable of locking the tool without causing the axial displacement of the tool itself.

These and other objects, direct and complementary, have been achieved through the implementation of a new tool spindle comprising a body inside which there are a primary and a secondary shaft that are aligned with and coaxial to each other, rotation sensors and a fastening metal ring applied to the end of the secondary shaft. The primary shaft, integral with the spindle body, receives motion from the head and transmits it to the secondary shaft through an elastic twist element.

The secondary shaft, which rotates inside the body on ball and/or roller bearings, receives and holds the tool and is constituted by a generically cylindrical element.

On its end opposite the primary shaft, said secondary shaft is provided with a coaxial hole, notches parallel to the shaft axis, a threaded section and a tapered area.

The coaxial hole is suited to house the tool shank.

The notches are parallel to the axis and divide the area of the secondary shaft where the hole is positioned into various portions that are relatively flexible towards the inside of the hole itself.

The external surface of the secondary shaft in the area of the coaxial hole is tapered, with the smaller diameter facing the hole where the tool shank is inserted.

The external area near said hole for the insertion of the tool shank is threaded.

The internal surface of the metal ring is partly threaded and partly smooth and tapered. Said metal ring is screwed on the threaded end of the secondary shaft by tightening the parts divided by the notches and the tool shank and locking it.

Both on the surface of the spindle body and on the surface of the secondary shaft there is a reference slot parallel to the axis. When in rest position these slots are aligned.

A sensor detects the angular position of the slot in the spindle body, while a second sensor detects the angular position of the slot in the secondary shaft.

The elastic element maintains the secondary shaft rotatively preloaded against a stop ring; the preload is directed in such a way as to oppose the tangential operating force.

During the machining, the primary shaft transmits the rotary motion to the secondary shaft through the elastic twist element and the operating torque makes the secondary shaft turn in the direction opposite the rotation direction of the spindle until balance is reached between the force exerted by the elastic element and the operating force.

This means that the rotation angle generated between the body and primary shaft connected to the motor and the secondary shaft carrying the tool is proportional to the operating torque.

The two sensors of the two slots read the displacement between said slots, that is, the difference in their angular position that gives the rotation angle of the secondary shaft with respect to the body.

The machine, which in the meantime is processing a piece, adds or deducts small position values in such a way as to maintain a predefined setpoint.

At the end of a machining cycle the machine calculates the mean of the correction made and adjusts the rated value of the tool diameter in such a way as to compensate for its wear cycle after cycle.

Tool spindle comprising a support body both for a primary shaft, integral with the spindle body and suited to be set in motion by the head motor, and for a secondary shaft suited to hold the tool and rotating inside the spindle on apposite bearings, and wherein said secondary shaft is connected to said primary shaft through a twist elastic element that maintains the secondary shaft rotatively preloaded against a stop ring, in such a way as to oppose the tangential operating force. Both on the spindle body and on the secondary shaft there are reference slots that are aligned when the two shafts are in rest position and the spindle is not used, while two sensors, which detect the passage of each slot at each revolution of the spindle, measure the displacement between the two slots, that is, the angular displacement between the two shafts, in such a way as to allow the position of the spindle to be adjusted accordingly, by small values, and a predefined setpoint to be maintained.

The characteristics of the new tool spindle will be highlighted in greater detail in the following description, with reference to the drawings enclosed as non-limiting

### examples.

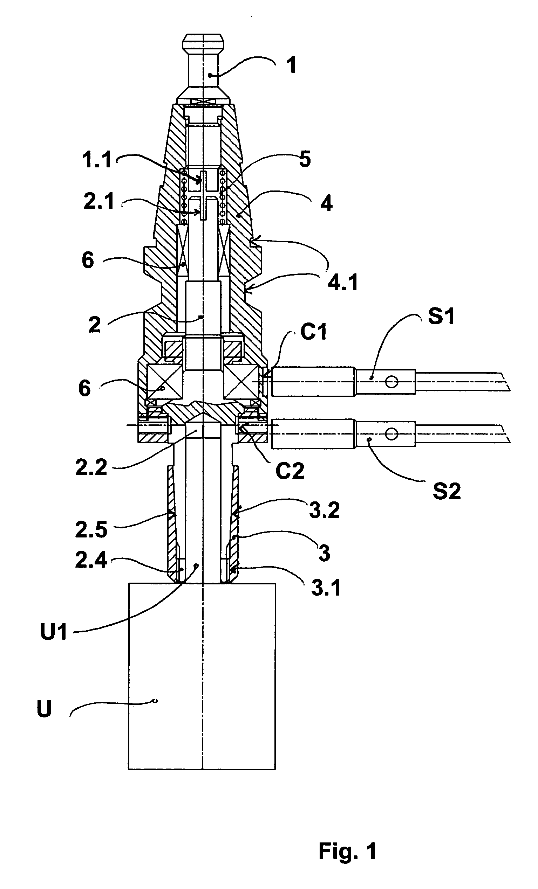

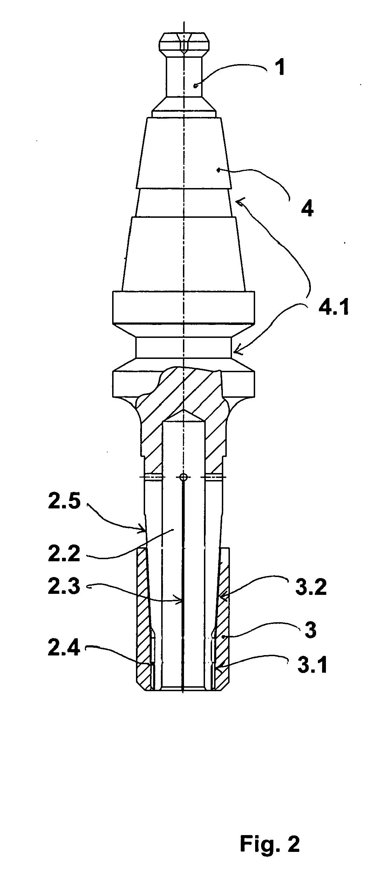

Figure 1 shows a vertical section of the new spindle with a schematic tool (U), while Figure 2 is a side view, partially sectioned, of the new spindle.

The new tool spindle comprises a body (4) inside which there are a primary shaft (1) and a secondary shaft (2), aligned with and coaxial to each other, and a fastening metal ring (3) applied to the end of the secondary shaft (2).

The body (4) is generically cylindrical in shape, with horizontal notches, seats or grooves (4.1) for storage in the tool magazine.

Inside the body (4) there are the primary shaft (1), integral with the body (4) of the spindle, and the secondary shaft (2). Said shafts (1, 2) are aligned and coaxial.

The adjacent ends of the primary (1) and secondary (2) shaft are provided with one or more elements or seats (1.1, 2.1) for fastening a twist elastic element (5), typically a cylindrical spring.

The primary shaft (1) receives motion from the head and transmits it to the secondary shaft (2) through said twist elastic element (5).

The secondary shaft (2) rotates inside the body (4) on ball and/or roller bearings (6).

The lower end of the secondary shaft (2), opposite the primary shaft (1), receives and holds the shank (U1) of the tool (U).

Said end of the secondary shaft (2) is provided with a coaxial hole (2.2), notches (2.3) parallel to the axis of the shaft (2), a threaded section (2.4) and a tapered area (2.5).

The coaxial hole (2.2) of the secondary shaft (2) is suited to receive the shank (U1) of the tool (U).

The notches (2.3) are parallel to the axis of the shaft (2) and divide the area of said secondary shaft (2) provided with the hole (2.2) into various portions that are relatively flexible towards the inside of the hole (2.2) itself.

The outer surface of the secondary shaft (2.2), in the area of the coaxial hole (2.2), is tapered (2.5) and in particular the portion with smaller diameter is near the opening of the hole (2.2) for the insertion of the shank (U1) of the tool (U).

The end of the secondary shaft (2), near said hole (2.2) for the insertion of the shank (U1) of the tool (U), is threaded (2.4).

The inner surface of the metal ring (3) is parly threaded (3.1) and partly smooth and tapered (3.2), so that said metal ring (3) can be connected to the secondary shaft (2) on its tapered-threaded section (2.5, 2.4).

Said metal ring (3) is preferably made of a bronze-based anti-seize high-resistance material.

Said metal ring (3) is screwed on the threaded end (2.4) of the secondary shaft (2).

When the metal ring is screwed (3), its inner tapered surface (3.2) tightens the tapered surface (2.5) of the secondary shaft (2), and consequently the parts divided by the notches (2.3) on the secondary shaft (2) tighten the shank (U1) of the tool (U), thus locking it. When the metal ring is unscrewed (3), the flexible parts divided by the notches (2.3) of the secondary shaft (2) release the shank (U1) of the tool (U), thus allowing it to be removed/replaced.

It is possible to carry out the metal ring (3) so that it is numbered or can be numbered, in such a way as to facilitate the positioning of the new spindle in the tool magazine.

Both on the surface of the body (4) of the spindle and on the surface of the secondary shaft (2) there is a reference slot (C1, C2) parallel to the axis of the spindle itself. In rest position said reference slots (C1, C2) are aligned.

During the machining, the primary shaft (1) transmits the rotary motion to the secondary shaft (2) through the twist elastic element (5) and the operating torque makes the secondary shaft (2) rotate in the direction opposite the spindle's rotation direction until reaching balance between the force exerted by the elastic element (5) and the operating force.

This means that the rotation angle generated between the body (4) with the primary shaft (1) connected to the motor and the secondary shaft (2) carrying the tool (U) is proportional to the operating torque.

Two sensors (S1, S2) read the angular passage of said two reference slots (C1, C2) at each rotation of the spindle.

The new tool spindle constituted as described above offers considerable advantages.

The new spindle is suitable for being positioned in the machine's tool magazine and is suitable for automatic tool change.

The new spindle locks the tool (U) securely and firmly, without causing or permitting axial displacements in the locking phase.

The new tool spindle, being constituted by a compact group of components, is more precise and more rigid than the known tool spindles.

The use of the new tool spindle ensures considerable advantages for the use of the tools (U) and for the control of their wear.

The two sensors (S1, S2) that detect the passage of the reference slots (C1, C2) are connected to the machine tool's control circuit.

During the machining, the primary shaft (1) transmits the rotary motion to the secondary shaft (2) through the twist elastic element (5) and the operating torque makes the secondary shaft (2) rotate in the direction opposite the spindle's rotation direction until balance is reached between the force exerted by the elastic element and the operating force.

The rotation angle generated between the body (4) with the primary shaft (1) connected to the motor and the secondary shaft (2) carrying the tool (U) is proportional to the operating torque and depends on the pressure of the rotary tool on the surface being machined.

The two sensors (S1, S2) of the two slots (C1, C2) read the displacement between said two slots (C1, C2), that is, the difference of the angular position that gives the rotation angle of the secondary shaft (2) with respect to the body (4) and to the primary shaft (1).

The machine tool, which in the meantime is carrying out the machining cycle, adds or deducts small position values, in such a way as to maintain a predefined setpoint.

At the end of one machining cycle, the machine tool calculates the mean of the correction carried out and adjusts the rated value of the diameter of the tool (U), in such a way as to compensate for its wear cycle after cycle.

Therefore, with reference to the above description and to the enclosed drawings, the following claims are expressed.

## Claims

1. Tool spindle, **characterized in that** it comprises a body (4) for supporting a primary shaft (1) suited to receive motion from the head motor, and a secondary shaft (2) suited to hold the tool (U), and wherein said primary shaft (1) is integral with the body (4) of the spindle, while the secondary shaft (2) rotates inside the spindle on apposite bearings (6), and wherein said secondary shaft (2) is connected to said primary shaft (1) through a twist elastic element (5).

2. Tool spindle according to claim 1, **characterized in that** said elastic element (5) maintains the secondary shaft (2) rotatively preloaded against a stop ring, in such a way as to oppose the tangential operating force.

3. Tool spindle according to claims 1, 2, **characterized in that** both the body (3) of the spindle and the secondary shaft (2) are provided with a reference slot (C1, C2) parallel to the spindle axis, and wherein said two slots (C1, C2) are aligned when the two shafts (1, 2) are in rest position and the spindle is not being used, and wherein two sensors (S1, S2) detect the passage of each slot (C1, C2) at each revolution of the spindle.

4. Tool spindle according to claims 1, 2, 3, **characterized in that** the machine's control circuit detects, by means of said sensors (S1, S2), the displacement between the two slots (C1, C2), that is, the angular displacement between the two shafts (1, 2), and consequently adjusts, by small values, the position of the spindle, in such a way as to maintain a predefmed setpoint.

5. Tool spindle according to claim 4, **characterized in that** the machine, at the end of each machining cycle, calculates the mean of the correction made and adjusts the rated value of the diameter of the tool (U), in such a way as to compensate for its wear cycle after cycle.

6. Tool spindle according to the previous claims, **characterized in that** the end of the shaft (2) housing the tool (U) is provided with a coaxial hole (2.2) for the insertion of the shank (U1) of the tool (U), and has notches (2.3) parallel to the axis of the shaft (2) that are such as to divide the end housing the shank (U1) in several relatively flexible portions, and wherein the outer surface of said end is tapered (2.5) and converges towards the tool (U) and the end of said tapered part (2.5) is threaded (2.4), and wherein a metal ring (3) whose inner surface is partly threaded (3.1) and partly tapered (3.2) is such as to be inserted and screwed in the tapered (2.5) and threaded (2.4) end of said shaft (2), in such a way as to tighten the parts divided by the notches (2.3) on the shank (U1) of the tool (U).
